# EUROPEAN PATENT APPLICATION

(11) **EP 4 233 646 A1**
(43) Date of publication of application: **30.08.2023**
(21) Application number: 22190340.4
(22) Date of filing: 15.08.2022
(51) Int. Cl.: A47J 27/086, A47J 36/06, A47J 36/24

(54) **A LID ASSEMBLY AND A COOKING APPLIANCE EQUIPPED WITH SUCH LID ASSEMBLY**

(30) Priority: 28.02.2022 CN 202210193648; 28.02.2022 CN 202220427702 U
(71) Applicant: Zhejiang Shaoxing Supor Domestic Electrical Appliance Co., Ltd., Shaoxing, Zhejiang 312017 (CN)
(72) Inventor: ZHOU, Liangping, Shaoxing (CN); LI, Jian, Shaoxing (CN); SHI, Tingfei, Shaoxing (CN)
(74) Representative: LLR

(57) **Abstract**

The present invention provides a lid assembly and a cooking machine equipped with such lid assembly, wherein, the lid assembly comprises: a cover lid, venting holes being arranged at a middle part of the cover lid; a baking assembly arranged on the cover lid and communicating with the venting hole; an air discharging tube passing through the cover lid; a pressure limiting valve arranged on the air discharging tube; a sealing hood detachably arranged below the cover lid and provided with a first annular position limiting protrusion that protrudes upward, the first annular position limiting protrusion surrounding the outer side of the venting holes and being located at the inner side of the air discharging tube; a first sealing part comprising a first sealing lip, a second sealing lip, and a position limiting part which cooperates with the first annular position limiting protrusion to fix the first sealing part to the sealing hood, wherein, the first sealing lip cooperates in a sealed manner with the outer face of the first annular position limiting protrusion, and the second sealing lip cooperates in a sealed manner with a lower surface of the cover lid, so as to separate the air discharging tube from the baking assembly. The technical solutions of the present invention can effectively solve the problem in the prior art that vapor enters a baking assembly and forms condensed water to damage the baking assembly.

## Description

The present invention relates to the technical filed of small home appliances, and in particular, relates to a lid assembly and a cooking appliance equipped with such lid assembly.

In the relevant art, a multi-functional cooking appliance can have a pressure cooking mode and a baking mode. A user can choose from these two cooking modes based on needs, which greatly facilitates the use. The pressure inside a cooking chamber are different in the two cooking modes. Therefore, usually two lids are provided, a pressure lid and a baking lid, to adapt to different cooking modes.

At present, integrated lid assemblies, i.e., lid assemblies capable of being used in both the pressure cooking mode and the baking mode, have been observed on the market. However, a large amount of vapour can be generated in the cooking chamber in the pressure cooking mode, which may enter into the baking assembly and forms condensed water that may damage the baking assembly.

A main objective of the present invention is to provide a lid assembly and a cooking appliance equipped with such lid assembly, so as to solve the problem in the prior art that vapour enters into the baking assembly and forms condensed water, damaging the baking assembly.

In order to achieve the above-described objective, according to an aspect of the present invention, a lid assembly is provided, comprising: a cover lid, venting holes being arranged in a middle part of the cover lid; a baking assembly arranged on the cover lid and communicating with the venting holes; an air discharging tube passing through the cover lid; a pressure limiting valve arranged on the air discharging tube; a sealing hood detachably arranged below the cover lid and provided with a first annular position limiting protrusion that protrudes upward, the first annular position limiting protrusion surrounding the outer side of the venting holes and being located at the inner side of the air discharging tube; a first sealing part comprising a first sealing lip, a second sealing lip and a position limiting part which cooperates with the first annular position limiting protrusion to fix the first sealing part to the sealing hood, wherein, the first sealing lip cooperates in a sealed manner with the outer face of the first annular position limiting protrusion, and the second sealing lip cooperates in a sealed manner with a lower surface of the cover lid, so as to separate the air discharging tube from the baking assembly.

In the technical solution of the invention, the lid assembly comprises a cover lid, a baking assembly and a sealing hood. The sealing hood is detachably arranged below the cover lid. In a baking mode, one only needs to detach the sealing hood to heat up food in a cooking chamber by means of the baking assembly. In a pressure cooking mode, one only needs to attach the sealing hood below the cover lid to separate the baking assembly from the cooking chamber, so as to prevent vapor generated during pressure cooking from entering the inside of the baking assembly. Specifically, the sealing hood is provided with a first sealing part comprising a first sealing lip which cooperates in a sealed manner with the outer face of the first annular position limiting protrusion, and a second sealing lip which cooperates in a sealed manner with the lower surface of the cover lid. Such structure can prevent vapor generated during the course of pressure cooking from entering the inside of the baking assembly. As the pressure inside the cooking chamber rises, the first sealing lip will press against the outer face of the first annular position limiting protrusion under the effect of the pressure, and the second sealing lip will press against the lower surface of the cover lid under the effect of the pressure, further ensuring the sealing effects and ensuring that vapor generated during the course of pressure cooking will not enter the inside of the baking assembly via a gap between the cover lid and the sealing hood. Therefore, the technical solution of the present invention is able to effectively solve the problem in the prior art wherein vapor enters the inside of a baking assembly and forms condensed water to damage the baking assembly.

Further, the cover lid is provided with a second annular position limiting protrusion that protrudes downward, the second sealing lip sloping up to seal with and to match the form of the outer face of the second annular position limiting protrusion. When the inside of the cooking chamber is pressurized, the second sealing lip will be pressed against the second annular position limiting protrusion under the effect of a pressure oriented obliquely upward, achieving good sealing effects. At the same time, a clamping gap having a relative small distance in the height direction to clamp the first sealing part can be formed between the second annular position limiting protrusion and the first annular position limiting protrusion, preventing the first sealing part from being compressed inward to leave its sealed position when over-pressurized.

Further, the height of the first annular position limiting protrusion is greater than the height of the second annular position limiting protrusion. This arrangement can render the structure inside the lid assembly more compact and reduce the volume of the lid assembly.

Further, the first annular position limiting protrusion comprises a first inner annular wall obliquely arranged and a first outer annular wall obliquely arranged, a first angle a being formed between the first inner annular wall and the first outer annular wall; the second annular position limiting protrusion comprises a second inner annular wall obliquely arranged and a second outer annular wall obliquely arranged, a second angle b being formed between the second inner annular wall and the second outer annular wall, wherein, the first angle a is smaller than the second angle b. This arrangement is adapted to the height relationship between the first annular position limiting protrusion and the second annular position limiting protrusion and renders the structure of the sealing hood and the cover lid more reasonable.

Further, the range of the first angle a is 23°≤a≤33°, and the range of the second angle b is 95°≤b≤105°. The first angle a within this range may reduce the processing difficulty of the first annular position limiting protrusion, while ensuring the sealing effects between the first sealing lip and the outer face of the first annular position limiting protrusion. The second angle b within this range also reduces the processing difficulty of the second annular position limiting protrusion, while ensuring the sealing effects between the second sealing lip and the outer face of the second annular position limiting protrusion.

Further, the first annular position limiting protrusion further comprises a first arc part located between the first inner annular wall and the first outer annular wall, and the second annular position limiting protrusion further comprises a second arc part located between the second inner annular wall and the second outer annular wall. The first inner annular wall and the first outer annular wall are connected by the first arc part, and the second inner annular wall and the second outer annular wall are connected by the second arc part, so that the structural strength of the first annular position limiting protrusion and the second annular position limiting protrusion can be ensured.

Further, a third angle c is formed between the first sealing lip and the second sealing lip, the range of the third angle c being 46° ≤c ≤57°. The third angle c within such range ensures the sealing effects.

Further, the length L1 of the first sealing lip is greater than the length L2 of the second sealing lip. This arrangement is adapted to the height relationship between the first annular position limiting protrusion and the second annular position limiting protrusion, ensuring sealing effects.

Further, the range of the length L1 of the first sealing lip is 7.5 mm ≤ L1 ≤ 10.5 mm and the range of the length L2 of the second sealing lip is 4 mm ≤ L2 ≤ 8 mm. When the length L1 is within such range, the sealing effects between the first sealing lip and the outer face of the first annular position limiting protrusion can be ensured. When the length L2 is within such range, the sealing effects between the second sealing lip and the outer face of the second annular position limiting protrusion can be ensured.

Further, the sealing hood is provided with a position limiting ring arranged at the inner side of the first annular position limiting protrusion, the position limiting part comprises a first position limiting lip and a second position limiting lip, the first position limiting lip being sandwiched between the first annular position limiting protrusion and the position limiting ring, a receiving depression that receives the position limiting ring being formed between the first position limiting lip and the second position limiting lip. In this embodiment, the first position limiting lip is sandwiched between the first annular position limiting protrusion and the position limiting ring, the second position limiting lip is sandwiched between the second annular position limiting protrusion and the position limiting ring, and the position limiting ring is located in the receiving depression formed between the first position limiting lip and the second position limiting lip, so as to ensure the fixation of the first sealing part.

Further, the first position limiting lip cooperates in a sealed manner with the inner face of the first annular position limiting protrusion, and/or the second position limiting lip slopes upward and cooperates in a sealed manner with the inner face of the second annular position limiting protrusion. Thus, the sealing surface formed between the first sealing part and the second and first annular position limiting protrusions can be increased, thereby improving the sealing effects.

Further, the second annular position limiting protrusion and the first annular position limiting protrusion are arranged in an offset manner, and the bottom of the second annular position limiting protrusion is located between the top of the first annular position limiting protrusion and the position limiting ring in the transversal direction. During pressurization, the sealing hood is pressed upward by the pressure inside the cooking chamber, the second annular position limiting protrusion, the first annular position limiting protrusion and the position limiting ring together clamp the first sealing part along the vertical direction, which can maintain the first sealing part at a sealed position, thereby ensuring the sealing effects.

Further, the cover lid is provided with a sinking part protruding downward and arranged at the inner side of the second annular position limiting protrusion, the baking assembly being arranged at the sinking part, the sinking part comprising a base plate and a side plate connected at the periphery of the base plate, the base plate and the side plate being both provided with venting holes. In a baking mode, hot wind can be blown to the inside of the cooking chamber via the venting holes to heat food therein.

Further, the height of the sinking part is greater than the height of the second annular position limiting protrusion. Thus, the second annular position limiting protrusion would not block the hot wind passing through the side plate, thereby ensuring food heating effects.

Further, the lid assembly further comprises a connecting assembly comprising a fixing part which passes through the cover lid and a connecting part which passes through the sealing hood, the connecting part and the fixing part being connected by insertion. This arrangement can achieve a detachable connection between the sealing hood and the cover lid through a simple structure which is easy to detach.

Further, the lid assembly further comprises a second sealing part arranged at the periphery of the sealing hood, the second sealing part being arranged at the outer side of the first sealing part, the second sealing part comprising a first lip extending upward and a second lip extending downward, the sealing hood being arranged inside a connecting depression which is formed between the first lip and the second lip. During pressure cooking, the second sealing part is sandwiched between the cover lid and the pot and seals the cooking chamber, ensuring the pressurizing effects.

Further, the sealing hood is further provided with air passage holes located at the outer side of the first annular position limiting protrusion. The air discharging tube is also located at the outer side of the first annular position limiting protrusion. During venting, air inside the cooking chamber can enter the inside of the lid assembly via the air passage holes and then be discharged via the air discharging tube.

Further, the baking assembly comprises a casing, a heating member, a fan, and a motor assembly driving the fan to rotate, the casing being arranged on and fitted to the cover lid, a middle part of the casing protruding upward so as to form a receiving space between the casing and the cover lid inside which the heating member and the fan are arranged, the motor assembly being arranged on the casing; the lid assembly further comprises a face lid which covers the cover lid and the baking assembly. This arrangement renders the structure inside the lid assembly more compact and helps to reduce the volume of the lid assembly.

According to another aspect of the present invention, a cooking appliance is provided, comprising a pot and a lid assembly arranged to cover the pot, the lid assembly being the lid assembly described above. The lid assembly can effectively solve the problem in the prior art that vapor enters the baking assembly and forms condensed water, damaging the baking assembly. A cooking appliance equipped with such lid assembly also has the above-described advantages.

The accompanying drawings forming a part of the present application are used to provide further understanding of the present invention, and the exemplary embodiments of the present invention and their descriptions are used to explain the present invention and do not constitute any undue limitation of the present invention. In the accompanying drawings:
Fig. 1 shows a schematic structural view in perspective of an embodiment of a lid assembly according to the present invention;
Fig. 2 shows a schematic exploded structural view of part of the lid assembly of Fig. 1;
Fig. 3 shows a schematic structural view in perspective of the lid assembly of Fig. 2;
Fig. 4 shows a schematic sectional view of the lid assembly of Fig. 3;
Fig. 5 shows an enlarged view of part A of the lid assembly of Fig. 4;
Fig. 6 shows a schematic structural view in perspective of the cover lid of the lid assembly of Fig. 1;
Fig. 7 shows a schematic sectional view of part of the cover lid of Fig. 6;
Fig. 8 is a schematic structural view in perspective of the sealing hood of the lid assembly of Fig. 1;
Fig. 9 is a schematic sectional view of part of the sealing hood of Fig. 8;
Fig. 10a and Fig. 10b show schematic sectional views of part of the first sealing part of the lid assembly of Fig. 1; and
Fig. 11 shows a schematic sectional view of part of the second sealing part of the lid assembly of Fig. 1.

The accompanying drawings contain the following references:
10: cover lid; 11: second annular position limiting protrusion; 111: second inner annular wall; 112: second annular outer wall; 113: second arc part; 12: sinking part; 121: base plate; 122: side plate; 13: venting hole; 20: baking assembly; 21: casing; 22: heating member; 23: fan; 24: motor assembly; 25: receiving space; 26: fixing snap; 30: air discharging tube; 50: sealing hood; 51: first annular position limiting protrusion; 511: first inner annular wall; 512: first outer annular wall; 513: first arc part; 52: position limiting ring; 53: air passage hole; 54: connector; 60: first sealing part; 61: first sealing lip; 62: second sealing lip; 63: first position limiting lip; 64: second position limiting lip; 65: receiving depression; 70: connecting assembly; 71: fixing part; 72: connecting part; 80: second sealing part; 81: first lip; 82: second lip; 83: connecting depression; 90: face lid.

The technical solutions of the present invention will be clearly and completely described below with reference to the accompanying drawings. Obviously, the described embodiments are only some, but not all, of the embodiments of the present invention. The following description of at least one exemplary embodiment is merely illustrative in nature and is in no way intended to limit the invention, its application, or uses. Based on the embodiments of the present invention, all other embodiments obtained by those of ordinary skill in the art without creative efforts shall fall within the protection scope of the present invention.

It should be noted that the terminology used herein is for the purpose of describing specific embodiments only, and is not intended to limit the exemplary embodiments according to the present application. As used herein, unless the context clearly dictates otherwise, the singular form is intended to include the plural form as well. Furthermore, it is to be understood that when the terms "comprising" and/or "including" are used in this specification, it indicates the presence of features, steps, operations, parts, components and/or combinations thereof.

The relative arrangement, numerical expressions and numerical values of the components and steps set forth in these embodiments do not limit the scope of the invention unless specifically stated otherwise. Meanwhile, it should be understood that, for the convenience of description, the dimensions of various parts shown in the accompanying drawings may not be drawn in an actual proportional relationship. Techniques, methods, and devices known to those of ordinary skill in the relevant art may not be discussed in detail, but where appropriate, such techniques, methods, and devices should be considered as part of the granted patent. In all examples shown and discussed herein, any specific value should be construed as illustrative only and not as limiting. Accordingly, other examples of exemplary embodiments may have different values. It should be noted that similar numerals and letters refer to similar items in the following figures. Therefore, once an item is defined in one figure, it does not require further discussion in subsequent figures.

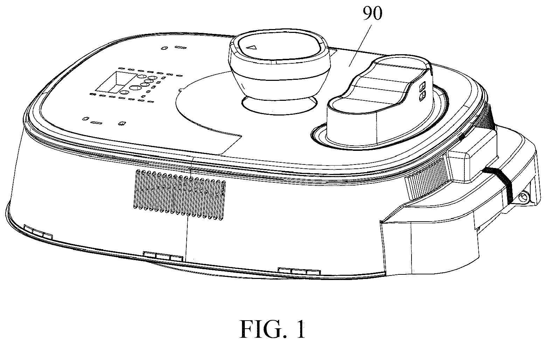

As shown in Figs. 1 to 5, the lid assembly of the present embodiment comprises: a cover lid 10, a baking assembly 20, an air discharging tube 30, a pressure limiting valve, a sealing hood 50, and a first sealing part 60. In this embodiment, venting holes 13 are arranged in a middle part of the cover lid 10. The baking assembly 20 is arranged on the cover lid 10 and communicating with the venting holes 13. The air discharging tube 30 is arranged to pass through the cover lid 10. The pressure limiting valve is arranged on the air discharging tube 30. The sealing hood 50 is detachably arranged below the cover lid 10 and is provided with a first annular position limiting protrusion 51 protruding upward. The first annular position limiting protrusion 51 surrounds the outer side of the venting holes 13 and is located at the inner side of the air discharging tube 30. The first sealing part 60 comprises a first sealing lip 61, a second sealing lip 62, and a position limiting part which cooperates with the first annular position limiting protrusion 51 so as to fix the first sealing part 60 to the sealing hood 50. The first sealing lip 61 cooperates in a sealed manner with the outer face of the first annular position limiting protrusion 51, and the second sealing lip 62 cooperates in a sealed manner with a lower surface of the cover lid 10, so as to separate the air discharging tube 30 from the baking assembly 20.

In the technical solution of this embodiment, the lid assembly comprises a cover lid 10, a baking assembly 20 and a sealing hood 50. The sealing hood 50 is detachably arranged below the cover lid 10. In a baking mode, the user only needs to detach the sealing hood 50 to heat up food in a cooking chamber by means of the baking assembly 20. In a pressure cooking mode, one only needs to attach the sealing hood 50 below the cover lid 10 to separate the baking assembly 20 from the cooking chamber so as to prevent vapor generated during the course of pressure cooking from entering the inside of the baking assembly 20. Specifically, the sealing hood 50 is provided with a first sealing part 60 comprising a first sealing lip 61 which cooperates in a sealed manner with the outer face of the first annular position limiting protrusion 51, and a second sealing lip 62 which cooperates in a sealed manner with a lower surface of the cover lid 10. Such structure can prevent vapor generated during the course of pressure cooking from entering the inside of the baking assembly 20. As the pressure inside the cooking chamber rises, the first sealing lip 61 will press against the outer face of the first annular position limiting protrusion 51 under the effect of the pressure, and the second sealing lip 62 will press against the lower surface of the cover lid 10 under the effect of the pressure, further ensuring the sealing effects and ensuring that vapor generated during the course of pressure cooking will not enter the inside of the baking assembly 20 via a gap between the cover lid 10 and the sealing hood 50. Therefore, the technical solution of the present embodiment is able to effectively solve the problem in the prior art wherein vapor enters the inside of a baking assembly and forms condensed water, damaging the baking assembly.

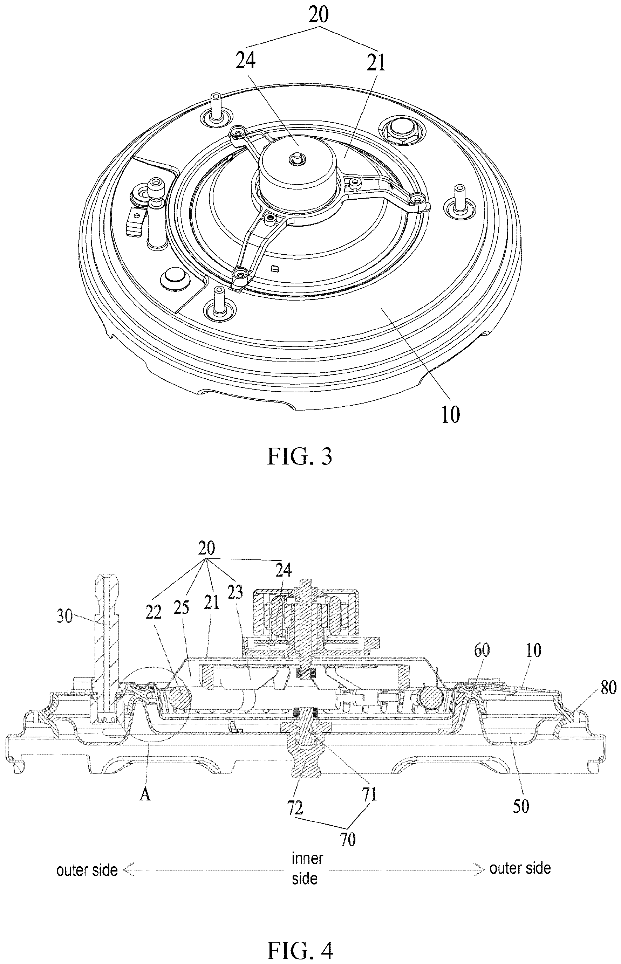

It should be noted that, as shown in Fig. 4, in the present application, the "inner side" means the side that is closer to the vertical axis of the lid assembly, and the "outer side" means the side that is further away from the vertical axis of the lid assembly, i.e., the side that is closer to the periphery of the lid assembly. The above-mentioned "middle part of the cover lid 10" is not limited to a central part.

As shown in Figs. 4 to 7, in the present embodiment, the cover lid 10 is provided with a second annular position limiting protrusion 11 that protrudes downward, the second sealing lip 62 sloping up to seal with and to match the form of the outer face of the second annular position limiting protrusion 62. Thus, when the inside of the cooking chamber is pressurized, the second sealing lip 62 will be pressed against the second annular position limiting protrusion 11 under the effect of a pressure oriented obliquely upward, achieving good sealing effects. At the same time, a clamping gap having a relative small distance in the height direction to clamp the first sealing part 60 can be formed between the second annular position limiting protrusion 11 and the first annular position limiting protrusion 51, preventing the first sealing part 60 from being compressed inward to leave its sealed position when over-pressurized.

In addition, as shown in Figs. 4, 5, 8, and 9, the sealing hood 50 further comprises a position limiting ring 52 arranged at the inner side of the first annular position limiting protrusion 51 and welded to the body of the sealing hood 50 by means of a plurality of connectors 54. This arrangement has the advantages of being a simple structure and easy to process and manufacture. The position limiting part cooperates with the first annular position limiting protrusion 51 so as to fix the first sealing part 60 to the sealing hood 50. During pressurization, the position limiting ring 52 can also block the first sealing part 60, preventing the first sealing part 60 from being compressed inward to leave its sealed position when over-pressurized.

In the present embodiment, providing the sealing hood 50 with the first annular position limiting protrusion 51 can also increase the strength of the sealing hood 50. Thus, the sealing hood 50 can be made thinner, which can effectively reduce the manufacture costs of the lid assembly. During pressurization, since the sealing hood 50 is subject to a certain pressure, and the first annular position limiting protrusion 51 is pressed against the lower surface of the cover lid 10, so that the cover lid 10 and the sealing hood 50 are subject to the pressure together.

As shown in Figs. 4, 5, and 8 to 10, the position limiting part comprises a first position limiting lip 63 and a second position limiting lip 64. The first position limiting lip 63 is sandwiched between the first annular position limiting protrusion 51 and the position limiting ring 52. A receiving depression 65 that receives the position limiting ring 52 is formed between the first position limiting lip 63 and the second position limiting lip 64. In this embodiment, the first position limiting lip 63 is sandwiched between the first annular position limiting protrusion 51 and the position limiting ring 52, the second position limiting lip 64 is sandwiched between the second annular position limiting protrusion 11 and the position limiting ring 52, and the position limiting ring 52 is located in the receiving depression 65 formed between the first position limiting lip 63 and the second position limiting lip 64, so as to ensure the fixing of the first sealing part 60.

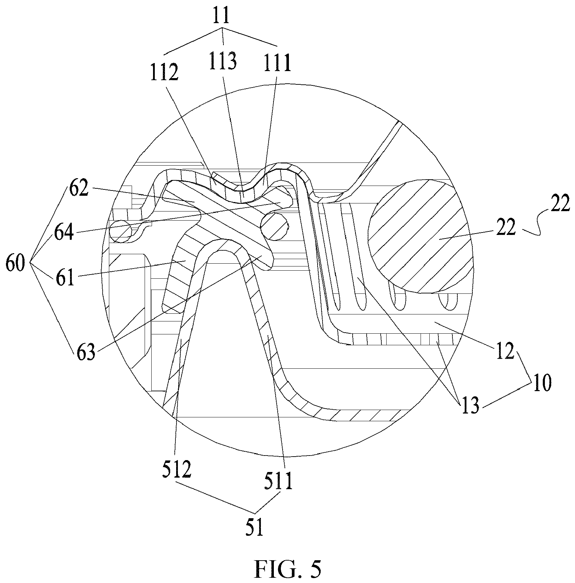

As shown in Figs. 4 and 5, the first position limiting lip 63 cooperates in a sealed manner with the inner face the first annular position limiting protrusion 51, the second position limiting lip 64 slopes upward and cooperates in a sealed manner with the inner face of the second annular position limiting protrusion 11. Thus, the sealing surface formed between the first sealing part 60 and the second annular position limiting protrusion 11 and the first annular position limiting protrusion 51 can be increased, thereby improving the sealing effects.

As shown in Figs. 4 and 5, in the present embodiment, the second annular position limiting protrusion 11 and the first annular position limiting protrusion 51 are arranged in an offset manner, and the bottom of the second annular position limiting protrusion 11 is located between the top of the first annular position limiting protrusion 51 and the position limiting ring 52. It should be noted that, the above-mentioned "the bottom of the second annular position limiting protrusion 11 is located between the top of the first annular position limiting protrusion 51 and the position limiting ring 52" means: in a transversal direction, the lowest point of the second annular position limiting protrusion 11 is located between the highest point of the first annular position limiting protrusion 51 and the highest point of the position limiting ring 52. Thus, during pressurization, the sealing hood 50 is pressed upward by the pressure inside the cooking chamber, the second annular position limiting protrusion 11, the first annular position limiting protrusion 51, and the position limiting ring 52 together clamp the first sealing part 60 along the vertical direction, which can maintain the first sealing part 60 at a sealed position, thereby ensuring the sealing effects.

As shown in Figs. 4 to 7, in the present embodiment, the cover lid 10 is provided with a sinking part 12 protruding downward and arranged at an inner side of the second annular position limiting protrusion 11. The baking assembly 20 is arranged at the sinking part 12, which comprises a base plate 121 and a side plate 122 connected at the periphery of the base plate 121. The base plate 121 and the side plate 122 are both provided with venting holes 13. In a baking mode, hot wind can be blown to the inside of the cooking chamber via the venting holes 13 to heat food therein.

As shown in Fig. 5, in the present embodiment, the height of the sinking part 12 is greater than the height of the second annular position limiting protrusion 11. Thus, the second annular position limiting protrusion 11 would not block the hot wind passing through the side plate 122, thereby ensuring food heating effects. Correspondingly, the height of the first annular position limiting protrusion 51 is greater than the height of the second annular position limiting protrusion 11. Thus, the sealing hood 50 can bypass the sinking part 12, so that the structure inside the lid assembly is rendered more compact and the volume of the lid assembly is reduced.

As shown in Figs. 4, 5, 7, and 9, the first annular position limiting protrusion 51 comprises a first inner annular wall 511 obliquely arranged and a first outer annular wall 512 obliquely arranged, a first angle a being formed between the first inner annular wall 511 and the first outer annular wall 512. The second annular position limiting protrusion 11 comprises a second inner annularwall 111 obliquely arranged and a second outer annular wall 112 obliquely arranged, a second angle b being formed between the second inner annular wall 111 and the second outer annular wall 112. The first angle a is smaller than the second angle b. This arrangement is adapted to the height relationship between the first annular position limiting protrusion 51 and the second annular position limiting protrusion 11 and renders the structure of the sealing hood 50 and the cover lid 10 more reasonable.

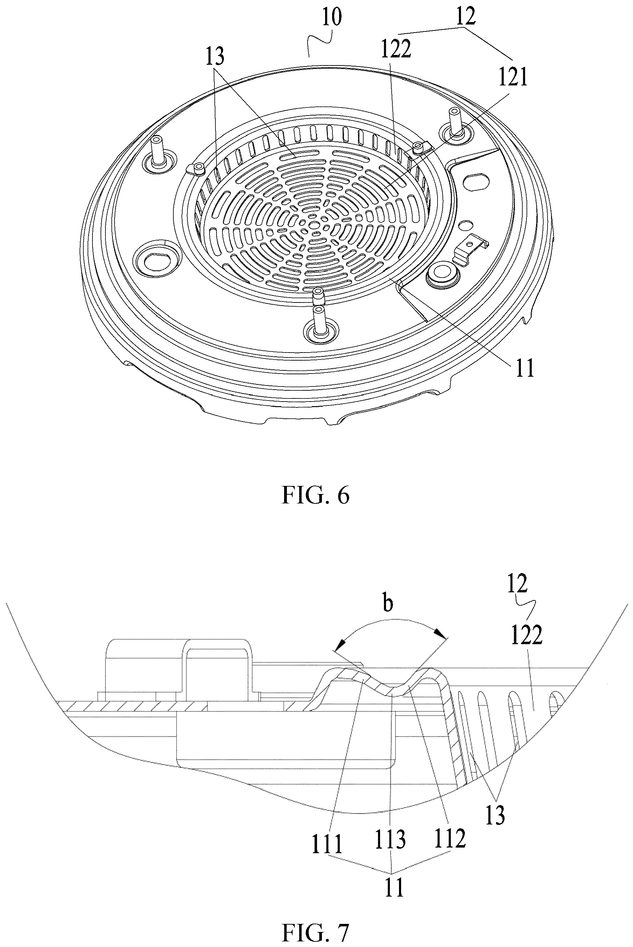

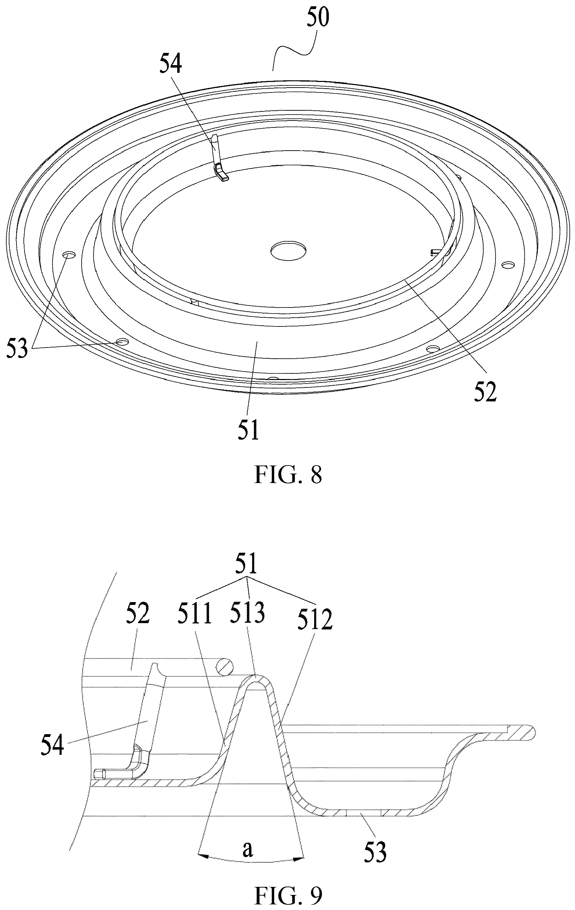

Specifically, in the present embodiment, as shown in Figs. 7 and 9, the range of the first angle a is 23°≤a≤33°. When the first angle a falls within this range, the processing difficulty of the first annular position limiting protrusion 51 can be reduced, and the sealing effects between the first sealing lip 61 and the outer face of the first annular position limiting protrusion 51 can be ensured. The range of the second angle b is 95°≤b≤105°. When the second angle b falls within this range, the processing difficulty of the second annular position limiting protrusion 11 can be reduced, and the sealing effects between the second sealing lip 62 and the outer face of the second annular position limiting protrusion 11 can be ensured. Preferably, the first angle a can be 23°, 28°, or 33°, etc. The second angle b can be 95°, 100°, or 105°, etc.

As shown in Figs. 4, 5, 7, and 9, the first annular position limiting protrusion 51 further comprises a first arc part 513 located between the first inner annular wall 511 and the first outer annular wall 512. The second annular position limiting protrusion 11 further comprises a second arc part 113 located between the second inner annular wall 111 and the second outer annular wall 112. The first inner annular wall 511 and the first outer annular wall 512 are connected by the first arc part 513, and the second inner annular wall 111 and the second outer annular wall 112 are connected by the second arc part 113, so that the structural strength of the first annular position limiting protrusion 51 and the second annular position limiting protrusion 11 can be ensured.

In the present embodiment, the shape of the first sealing part 60 matches the structure of the first annular position limiting protrusion 51 and the second annular position limiting protrusion 11. During pressurization, the first sealing part 60 can press tightly against the first annular position limiting protrusion 51 and the second annular position limiting protrusion 11 respectively, providing good sealing effects.

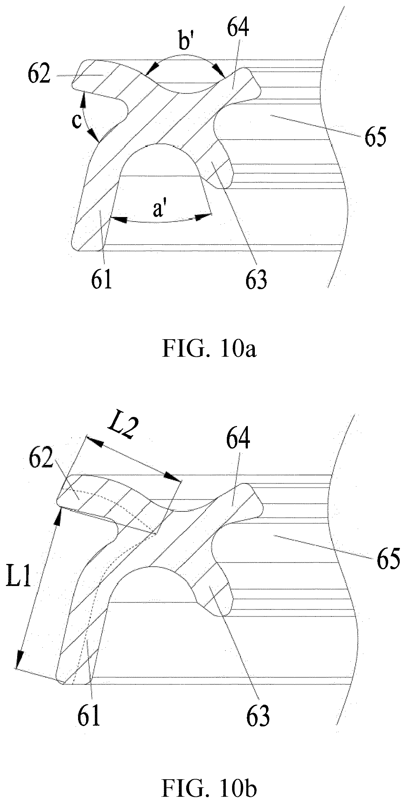

Correspondingly, as shown in Fig. 10a, a fourth angle a' is formed between the first sealing lip 61 and the first position limiting lip 63, and a fifth angle b' is formed between the second sealing lip 62 and the second position limiting lip 64. The first angle a is equal to the fourth angle a', and the second angle b is equal to the fifth angle b'.

As shown in Fig. 10a, a third angle c is formed between the first sealing lip 61 and the second sealing lip 62, the range of the third angle c being 46°≤c≤57°. When the third angle c falls within this range, sealing effects are ensured. Preferably, the third angle c can be 46°, 51 °, or 57° etc.

As shown in Fig. 10b, the length L1 of the first sealing lip 61 is greater than the length L2 of the second sealing lip 62.

Specifically, the range of the length L1 of the first sealing lip 61 is 7.5 mm ≤ L1 ≤ 10.5 mm. When the length L1 falls within this range, the sealing effects between the first sealing lip 61 and the outer face of the first annular position limiting protrusion 51 can be ensured. The range of the length L2 of the second sealing lip 62 is 4 mm ≤ L2 ≤ 8 mm. When the length L2 falls within this range, the sealing effects between the second sealing lip 62 and the outer face of the second annular position limiting protrusion 11 can be ensured. Preferably, the length L1 is 7.5 mm, 9 mm, or 10.5 mm etc, and the length L2 is 4 mm, 6 mm, or 8 mm etc.

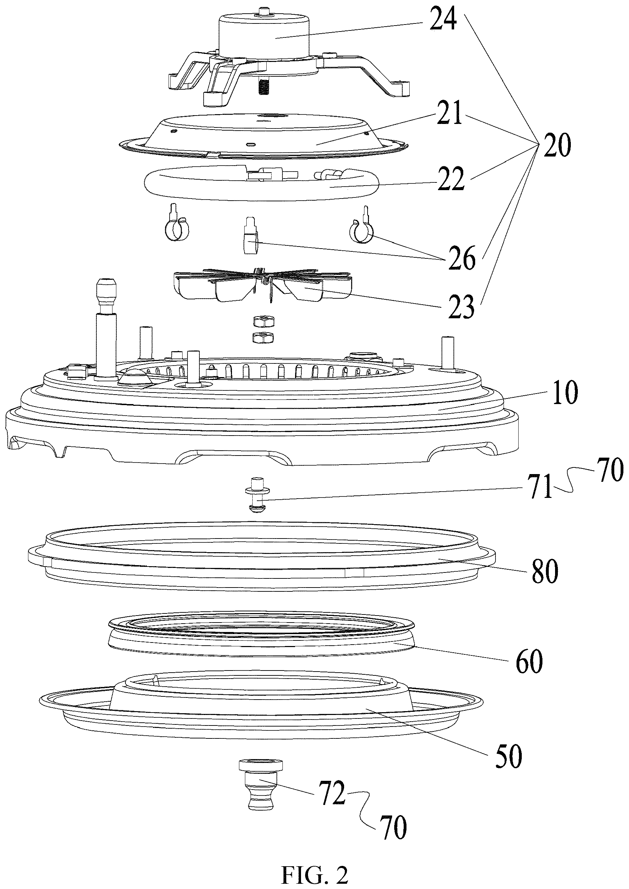

As shown in Figs. 2 and 4, the lid assembly further comprises a connecting assembly 70 comprising a fixing part 71 which passes through the cover lid 10 and a connecting part 72 which passes through the sealing hood 50, the connecting part 72 and the fixing part 71 being connected by insertion. This arrangement can achieve a detachable connection between the sealing hood 50 and the cover lid 10 through a simple structure which is easy to detach.

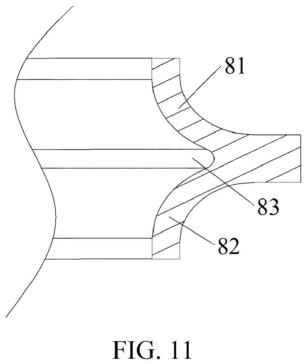

As shown in Figs. 4 and 11, the lid assembly further comprises a second sealing part 80 arranged at the periphery of the sealing hood 50 and at the outer side of the first sealing part 60. The second sealing part 80 comprises a first lip 81 extending upward and a second lip 82 extending downward. The sealing hood 50 is arranged inside a connecting depression 83 which is arranged between the first lip 81 and the second lip 82. During pressure cooking, the second sealing part 80 is sandwiched between the cover lid 10 and the pot and seals the cooking chamber, ensuring the pressurizing effects.

As shown in Figs. 3, 4, 8, and 9, the sealing hood 50 is further provided with air passage holes 53 located at the outer side of the first annular position limiting protrusion 51. The air discharging tube 30 is also located at the outer side of the first annular position limiting protrusion 51. During venting, air inside the cooking chamber can enter the inside of the lid assembly via the air passage holes 53 and then be discharged via the air discharging tube 30.

As shown in Figs. 1 to 4, the baking assembly 20 comprises a casing 21, a heating member 22, a fan 23, and a motor assembly 24 driving the fan 23 to rotate. The casing 21 is arranged on and fitted to the cover lid 10. A middle part of the casing 21 protrudes upward so as to form a receiving space 25 between the casing 21 and the cover lid 10 inside which the heating member 22 and the fan 23 are both arranged. The motor assembly 24 is arranged on the casing 21. The lid assembly further comprises a face lid 90 that is arranged to cover the cover lid 10 and the baking assembly 20. In this embodiment, the heating member 22 is arranged on the casing 21 by means of fixing snaps 26. This arrangement renders the structure inside the lid assembly more compact and can reduce the volume of the lid assembly.

In the present embodiment, the heating member 22 is arranged on the casing 21 by means of the fixing snaps 26. The motor assembly 24 passes through the casing 21 and the fan 23 is mounted thereto by means of a nut. The fixing part 71 passes through a central hole of the cover lid 10 and is fixed by a nut, so as to form a snap part. The motor assembly 24 is also fixed to the casing 21 by means of a screw. The position limiting ring 52 is welded to the sealing hood 50, and the first sealing part 60 is inserted between the position limiting ring 52 and the first annular position limiting protrusion 51 to achieve its positioning. The second sealing part 80 is arranged in the cover lid 10. The connecting part 72 passes through a central hole of the sealing hood 50 and is connected with the fixing part 71 by insertion.

During pressurized cooking, the connecting part 72 is connected with the fixing part 71 by insertion so as to connect the sealing hood 50 to the cover lid 10. At this moment, the first annular position limiting protrusion 51 and the second annular position limiting protrusion 11 abut to each other. When a certain pressure is generated inside the pot, air enters the outer side of the first sealing part 60 from the air passage holes 53. Under the effect of the pressure, the first sealing lip 61 and the second sealing lip 62 are expanded towards two sides and press respectively against the first annular position limiting protrusion 51 and the second annular position limiting protrusion 11.

Lid assemblies of embodiments 1 to 11 and of the comparative examples 1 to 8 have been tested for their sealing performance, which is shown in Table 1.

| | First Angel a (°) | Second Angle b (°) | Third Angle c (°) | Length L1 (mm) | Length L2 (mm) | Sealing Performance (Kpa) |
|---|---|---|---|---|---|---|
| Embodiment 1 | 23 | 100 | 51 | 9 | 6 | 240 |
| Embodiment 2 | 28 | 100 | 51 | 9 | 6 | 235 |
| Embodiment 3 | 33 | 100 | 51 | 9 | 6 | 225 |
| Embodiment 4 | 28 | 105 | 51 | 9 | 6 | 230 |
| Embodiment 5 | 28 | 95 | 51 | 9 | 6 | 240 |
| Embodiment 6 | 28 | 100 | 46 | 9 | 6 | 230 |
| Embodiment 7 | 28 | 100 | 57 | 9 | 6 | 240 |
| Embodiment 8 | 28 | 100 | 51 | 7.5 | 6 | 200 |
| Embodiment 9 | 28 | 100 | 51 | 10.5 | 6 | 240 |
| Embodiment 10 | 28 | 100 | 51 | 9 | 4 | 210 |
| Embodiment 11 | 28 | 100 | 51 | 9 | 8 | 245 |
| Example 1 | 50 | 100 | 51 | 9 | 6 | 195 |
| Example 2 | 28 | 120 | 51 | 9 | 6 | 190 |
| Example 3 | 28 | 100 | 35 | 9 | 6 | 175 |
| Example 4 | 28 | 100 | 51 | 4 | 6 | 185 |
| Example 5 | 28 | 100 | 51 | 9 | 2 | 180 |
| Example 6 | 15 | 110 | 40 | 5 | 2 | 170 |
| Example 7 | 40 | 90 | 40 | 5 | 2 | 165 |
| Example 8 | 28 | 100 | 51 | 5 | 2 | 175 |

The above sealing performance means the maximum pressure that a lid assembly can withstand without leaking. In the present embodiments, when the sealing performance is higher than 200 Kpa, the product is conforming.

It can be seen by comparing the data in Table 1 that, the sealing performance of the lid assembly can be improved when employing the technical solutions of the embodiments 1 to 11 of the present invention, by choosing appropriate values for the five parameters.

By comparing the data of the embodiments 1 to 3 and the comparative example 1, it can be concluded that, when the first angle a increases, the sealing performance of the lid assembly is reduced. When the first angle a falls within the range of 23°:5a:533°, the lid assembly can ensure the sealing performance. When the first angle a = 50°, the lid assembly cannot provide satisfying sealing performance.

By comparing the data of the embodiments 2, 4, and 5 and the comparative example 2, it can be concluded that, when the second angle b increases, the sealing performance of the lid assembly is reduced. When the second angle b falls within the range of 95°≤b≤105°, the lid assembly can ensure the sealing performance. When the second angle b = 120°, the lid assembly cannot provide satisfying sealing performance.

By comparing the data of the embodiments 2, 6, and 7 and the comparative example 3, it can be concluded that, when the third angle c increases, the sealing performance of the lid assembly is improved. When the third angle c falls within the range of 46°≤c≤57°, the lid assembly can ensure the sealing performance. When the third angle c = 35°, the lid assembly cannot provide satisfying sealing performance.

By comparing the data of the embodiments 2, 8, and 9 and the comparative example 4, it can be concluded that, when the length L1 increases, the sealing performance of the lid assembly is improved. Similarly, by comparing the data of the embodiments 2, 10, and 11 and the comparative example 5, it can be concluded that, when the length L2 increases, the sealing performance of the lid assembly is improved. In other words, to the extent allowed by the space inside the lid assembly, the greater the length L1 and length L2 are, the better. In the present embodiments, the range of the length L1 of the first sealing lip is 7.5mm ≤ L1 ≤ 10.5mm; the range of the length L2 of the second sealing lip is 4mm ≤ L2 ≤ 8mm, which can provide satisfying sealing performance while keeping the structure inside the lid assembly compact.

By comparing the data of the embodiments 1 to 11 and comparative examples 1 to 8, It can be concluded that, when the range of the first angle a is 23°≤ a ≤33°, the range of the second angle b is 95° ≤ b ≤ 105°, and the range of the third angle c is 46°≤ c ≤ 57°, the range of the length L1 of the first sealing lip is 7.5mm ≤ L1 ≤ 10.5mm, and the range of the length L2 of the second sealing lip is 4mm ≤ L2 ≤ 8mm, the sealing performance of the lid assembly can be ensured. When one or more of the five parameters exceed its corresponding range, the lid assembly cannot provide satisfying sealing performance.

The present invention also provides a cooking appliance, comprising a pot and a lid assembly that is arranged to cover the pot, wherein, the lid assembly is the lid assembly described above. The above-described lid assembly comprises the first sealing part 60 comprising the first sealing lip 61 that cooperates in a sealed manner with the outer face of the first annular position limiting protrusion 51 and the second sealing lip 62 that cooperates in a sealed manner with the lower surface of the cover lid 10. Thus, vapor generated during pressurized cooking can be prevented from entering the inside of the baking assembly 20. As the pressure in the cooking chamber rises, the first sealing lip 61 will press against the outer face of the first annular position limiting protrusion 51 under the effect of the pressure, and the second sealing lip 62 will press against the lower surface of the cover lid 10 under the effect of the pressure, further ensuring the sealing effects so that vapor generated during pressurized cooking will not enter the inside of the baking assembly 20 via a gap formed between the cover lid 10 and the sealing hood 50. The above-described lid assembly can effectively solve the problem in the prior art that vapor enters the inside of the baking assembly and forms condensed water which may damage the baking assembly. Therefore, the cooking appliance equipped with the above-described lid assembly also has the above-described advantages.

In the present embodiment, the cooking appliance is a multi-functional cooking appliance having a pressure cooking mode and a baking mode. Of course, in an embodiment not illustrated in the drawings, the cooking appliance can also be an electric rice cooker, a low-pressure rice cooker, a soy milk maker, a food processor, a stir-frying machine, an electric stewpot, a multi-functional cooker, etc.

It should be understood that in the description of the present invention, the orientation or position relationships indicated by orientation words such as "front, rear, top, bottom, left, right," "horizontal, vertical, vertical, horizontal" and "top, bottom" are generally based on the orientation or position relationships shown in the accompanying drawings, which only aim at facilitating the description of the present invention and simplifying the description. These orientation words do not indicate or imply the related device or element must have a specific orientation or be constructed and operated in a specific orientation, unless otherwise stated, and therefore cannot be construed as a limitation on the protection scope of the present invention. The orientation words "inner, outer" refer to the inner side and outer side relative to the contour of each component itself.

For the ease of description, spatial relative terms such as "on," "over," "on the surface," "above," etc., may be used herein to describe the spatial position relationship between a part or feature relative to another part or feature as shown in the accompanying drawings. It should be understood that spatial relative terms are intended to encompass different orientations of the part in use or operation in addition to the orientation depicted in the accompanying drawings. For example, if a part in an accompanying drawing is turned over, then the part, described as "above" or "on top of" another part, would then be oriented "below" or "beneath" the other part. Thus, the exemplary term "above" can encompass both an orientation of "above" and "below." The part may also be otherwise oriented (rotated 90 degrees or at other orientations) and the spatial relative descriptions used herein are interpreted accordingly.

In addition, it should be noted that words such as "first" and "second" used to define components is only for the convenience of distinguishing corresponding components. Unless otherwise stated, the above words have no special meaning and therefore cannot be understood to limit the scope of protection of the present invention.

The above descriptions are only preferred embodiments of the present invention, and are not intended to limit the present invention. For those skilled in the art, the present invention may have various modifications and changes. Any modification, equivalent replacement, improvement, etc. made within the spirit and principle of the present invention shall be included within the protection scope of the present invention.

## Claims

1. A lid assembly, **characterized in that**, it comprises:
- a cover lid (10), venting holes (13) being arranged at a middle part of the cover lid (10);
- a baking assembly (20) arranged on the cover lid (10) and communicating with the venting holes (13);
- an air discharging tube (30) passing through the cover lid (10);
- a pressure limiting valve arranged on the air discharging tube (30);
- a sealing hood (50) detachably arranged below the cover lid (10) and provided with a first annular position limiting protrusion (51) that protrudes upward, the first annular position limiting protrusion (51) surrounding the outer side of the venting holes (13) and being located at the inner side of the air discharging tube (30);
- a first sealing part (60) comprising a first sealing lip (61), a second sealing lip (62), and a position limiting part which cooperates with the first annular position limiting protrusion (51) to fix the first sealing part (60) to the sealing hood (50),
wherein, the first sealing lip (61) cooperates in a sealed manner with the outer face of the first annular position limiting protrusion (51), and the second sealing lip (62) cooperates in a sealed manner with a lower surface of the cover lid (10), so as to separate the air discharging tube (30) from the baking assembly (20).

2. The lid assembly of claim 1, **characterized in that**, the cover lid (10) is provided with a second annular position limiting protrusion (11) that protrudes downward, the second sealing lip (62) sloping up to seal with and to match the form of the outer face of the second annular position limiting protrusion (11).

3. The lid assembly of claim 2, **characterized in that**, the height of the first annular position limiting protrusion (51) is greater than the height of the second annular position limiting protrusion (11).

4. The lid assembly of claim 2 or 3, **characterized in that**,
- the first annular position limiting protrusion (51) comprises a first inner annular wall (511) obliquely arranged and a first outer annular wall (512) obliquely arranged, a first angle a being formed between the first inner annular wall (511) and the first outer annular wall (512);
- the second annular position limiting protrusion (11) comprises a second inner annular wall (111) obliquely arranged and a second outer annular wall (112) obliquely arranged, a second angle b being formed between the second inner annular wall (111) and the second outer annular wall (112),
wherein, the first angle a is smaller than the second angle b, the range of the first angle a being preferably 23°≤ a ≤ 33°, and the range of the second angle b being preferably 95°≤ b ≤105°.

5. The lid assembly of claim 4, **characterized in that**, the first annular position limiting protrusion (51) further comprises a first arc part (513) located between the first inner annular wall (511) and the first outer annular wall (512), and the second annular position limiting protrusion (11) further comprises a second arc part (113) located between the second inner annular wall (111) and the second outer annular wall (112).

6. The lid assembly of any one of claims 1 to 5, **characterized in that**, a third angle c is formed between the first sealing lip (61) and the second sealing lip (62), the range of the third angle c being 46°≤ c ≤57°.

7. The lid assembly of any one of claims 1 to 6, **characterized in that**, the length L1 of the first sealing lip (61) is greater than the length L2 of the second sealing lip (62), the range of the length L1 of the first sealing lip (61) being preferably 7.5 mm ≤ L1 ≤ 10.5 mm, and the range of the length L2 of the second sealing lip (62) being preferably 4 mm ≤ L2 ≤ 8 mm.

8. The lid assembly of any one of claims 1 to 7, **characterized in that**, the sealing hood (50) is further provided with a position limiting ring (52) arranged at the inner side of the first annular position limiting protrusion (51), the position limiting part comprises a first position limiting lip (63) and a second position limiting lip (64), the first position limiting lip (63) being sandwiched between the first annular position limiting protrusion (51) and the position limiting ring (52), a receiving depression (65) that receives the position limiting ring (52) being formed between the first position limiting lip (63) and the second position limiting lip (64).

9. The lid assembly of claim 8, **characterized in that**, the first position limiting lip (63) cooperates in a sealed manner with the inner face of the first annular position limiting protrusion (51), and/or the second position limiting lip (64) slopes upward and cooperates in a sealed manner with the inner face of the second annular position limiting protrusion (11 ).

10. The lid assembly of any one of claims 2 to 9, **characterized in that**, the second annular position limiting protrusion (11) and the first annular position limiting protrusion (51) are arranged in an offset manner, and the bottom of the second annular position limiting protrusion (11) is located between the top of the first annular position limiting protrusion (51) and the position limiting ring (52) in the transversal direction.

11. The lid assembly of any one of claims 2 to 10, **characterized in that**, the cover lid (10) is provided with a sinking part (12) protruding downward and arranged at the inner side of the second annular position limiting protrusion (11), the baking assembly (20) being arranged at the sinking part (12), the sinking part (12) comprising a base plate (121) and a side plate (122) connected at the periphery of the base plate (121), the base plate (121) and the side plate (122) being both provided with venting holes (13).

12. The lid assembly of claim 11, **characterized in that**, the height of the sinking part (12) is greater than the height of the second annular position limiting protrusion (11).

13. The lid assembly of any one of claims 1 to 12, **characterized in that**, the lid assembly further comprises a second sealing part (80) arranged at the periphery of the sealing hood (50), the second sealing part (80) being arranged at the outer side of the first sealing part (60), the second sealing part (80) comprising a first lip (81) extending upward and a second lip (82) extending downward, the sealing hood (50) being arranged inside a connecting depression (83) which is formed between the first lip (81) and the second lip (82).

14. The lid assembly of any one of claims 1 to 13, **characterized in that**, the sealing hood (50) is further provided with air passage holes (53) located at the outer side of the first annular position limiting protrusion (51).

15. The lid assembly of any one of claims 1 to 14, **characterized in that**, the baking assembly (20) comprises a casing (21), a heating member (22), a fan (23), and a motor assembly (24) driving the fan (23) to rotate, the casing (21) being arranged on the cover lid (10) and fitted to the cover lid (10), a middle part of the casing (21) protruding upward so as to form a receiving space (25) between the casing (21) and the cover lid (10) inside which the heating member (22) and the fan (23) are arranged, the motor assembly (24) being arranged on the casing (21).

16. A cooking appliance, comprising a pot and a lid assembly arranged to cover the pot, **characterized in that**, the lid assembly is according to any one of claims 1 to 15.
